# EUROPÄISCHE PATENTSCHRIFT

(11) **EP 2 334 530 B1**
(45) Veröffentlichungstag und Bekanntmachung des Hinweises auf die Patenterteilung: **11.12.2013**
(21) Anmeldenummer: 09737343.5
(22) Anmeldetag: 07.10.2009
(51) Int. Cl.: B60T 17/08, F16D 65/28, F16J 15/48

(54) **FAHRZEUGBREMSZYLINDER MIT VERKIPPUNGEN EINES STEIFEN BREMSKOLBENS TOLERIERENDER DICHTUNGSANORDNUNG**
AUTOMOTIVE BRAKE CYLINDER COMPRISING A SEALING SYSTEM WHICH TOLERATES TILTS OF A RIGID BRAKE PISTON
CYLINDRE DE FREIN DE VÉHICULE COMPRENANT UN SYSTÈME D'ÉTANCHÉITÉ TOLÉRANT DES INCLINAISONS D'UN PISTON DE FREIN RIGIDE

(30) Priorität: 09.10.2008 DE 102008051118
(43) Veröffentlichungstag der Anmeldung: 22.06.2011
(73) Patentinhaber: KNORR-BREMSE Systeme für Nutzfahrzeuge GmbH, 80809 München (DE)
(72) Erfinder: HERGES, Michael, 80935 München (DE); FANTAZI, Alain, F-14160 Dives sur mer (FR); HEMERY, Franck, F-14600 Honfleur (FR); SKRIBA, Zoltan, H-1037 Budapest (HU)
(74) Vertreter: Mattusch, Gundula
(86) Internationale Anmeldenummer: PCT/EP2009/007183
(87) Internationale Veröffentlichungsnummer: WO 2010/040509

(56) Entgegenhaltungen:
- EP-A- 0 279 044
- DE-A1- 2 263 323
- DE-A1- 3 624 475
- DE-A1- 3 731 814
- DE-A1- 10 327 777
- FR-A- 2 318 369
- US-A- 4 541 640

## Beschreibung

### Stand der Technik

Die Erfindung geht aus von einem Bremszylinder eines Fahrzeugs, in welchem ein druckmittelbetätigter Bremskolben geführt ist, welcher eine Bremskammer begrenzt und mit einer auf Bremsbetätigungselemente einwirkenden Bremskolbenstange verbunden ist, wobei ein Druckmittelanschluss zum Zu- und/oder Abführen von Druckmittel in die bzw. aus der Bremskammer vorgesehen ist und die Bremskolbenstange zusammen mit dem Bremskolben während eines Betätigungshubs in von einer Mittelachse des Bremszylinders verkippte Lagen schwenkt, gemäß dem Oberbegriff von Anspruch 1.

Ein solcher Bremszylinder ist beispielsweise in der DE 197 56 519 A1 offenbart. Dabei ist die Baueinheit aus Bremskolben und Bremskolbenstange über Letztere an einem Schwenkhebel einer Bremsmechanik einer Scheibenbremse eines Nutzfahrzeugs angelenkt, der andererseits über eine Zuspannwelle an einem Bremssattel der Scheibenbremse gelagert ist. Die Zuspannwelle weist eine Nockenkontur auf, welche bei einem Verdrehen um ihre Längsachse zu einer Relatiwerschiebung des Bremssattels und einer Bremsbacke in Richtung Bremsscheibe führt. Jedoch dreht sich bei einem Kolbenhub des Bremskolbens im Bremszylinder der Anlenkpunkt der Bremskolbenstange am Schwenkhebel um die Zuspannwelle, was eine Verkippung oder Verschwenkung der Baueinheit aus Bremskolben und Bremskolbenstange innerhalb des Bremszylinders zur Folge hat.

Um Schwenkbewegungen des Bremskolbens gegenüber dem Bremszylinder zu ermöglichen, ist der Bremskolben als flexible Kolbenmembrane ausgeführt, welche über ihren radial äußeren Umfangsrand am Bremszylinder befestigt ist und von einem mit der Bremskolbenstange verbundenen Teller der Bremskolbenstange abgestützt wird. Eine solche Kolbenmembrane ist aufgrund ihrer Elastizität in der Lage, die während eines Kolbenhubs auftretenden Schwenkbewegungen der Bremskolbenstange auszugleichen.

Jedoch legt sich eine solche Kolbenmembrane mit größer werdendem Hub teilweise an die radial innere Zylinderwandung des Bremszylinders an, wodurch sich die in Bezug zum Druck des Druckmittels wirksame Fläche der Kolbenmembrane abhängig vom Kolbenhub ändert. Dies bedingt eine Abweichung der erwünschten Linearität zwischen Kolbenhub und erzeugter Bremskraft. Weiterhin erfordert eine solche Kolbenmembrane einen relativ großen Bauraum in radialer Richtung, weil ihr Rand an der radial inneren Zylinderwandung des Bremszylinders befestigt bzw. geklemmt werden muss.

Eine Lösung, bei welcher der Bremskolben steif ausgeführt ist, sich bei Druckbeaufschlagung nicht verformt und mit seinem radial äußeren Umfangsrand unmittelbar an der radial inneren Zylinderwandung des Bremszylinders geführt ist, wäre daher demgegenüber anzustreben. Bei Verwendung eines steifen Bremskolbens anstatt einer flexiblen Kolbenmembrane besteht aber das Problem, dass der zwischen der radial äußeren Umfangsfläche des Bremskolbens und der radial inneren Zylinderwandung des Bremszylinders vorhandene und kleine Luftspalt in jeder Schwenklage des Bremskolbens gleich groß sein soll, um in jeder Schwenklage des Bremskolbens eine gleich bleibende Führung des Bremskolbens im Bremszylinder zu gewährleisten.

Dokument DE 37 31 814 offenbart ein Bremszylinder gemäß dem Oberbegriff des Anspruchs 1.

Der Erfindung liegt daher die Aufgabe zugrunde, einen Bremszylinder der eingangs erwähnten Art derart weiter zu bilden, dass die oben beschriebenen Nachteile vermieden werden.

Diese Aufgabe wird erfindungsgemäß durch die Merkmale von Anspruch 1 gelöst.

### Offenbarung der Erfindung

Gemäß eines ersten Aspekts der Erfindung ist der Bremskolben steif ausgebildet, d.h. er verformt sich unter den im Betrieb auftretenden Druckänderungen bzw. Druckbeaufschlagungen nicht oder nur unwesentlich. Weiterhin wird der Bremskolben samt Dichtungen und Führungselementen im Gegensatz zu einer Kolbenmembrane innerhalb der radial inneren Zylinderwandung des Bremszylinders einheitlich geführt bzw. verschoben, d.h. alle Bestandteile des Bremskolbens führen gleichzeitig und den gleichen Kolbenhub aus.

Dadurch kann der Bremszylinder im Durchmesser kleiner bauen, weil im Gegensatz zu einer Kolbenmembrane keine Randbefestigung notwendig ist und der Bremskolben innerhalb der radial inneren Zylinderwandung des Bremszylinders koaxial geführt ist. Bei gleichem Durchmesser kann daher ein Zylinder-Kolben-Trieb mit steifem Bremskolben eine größere Kraft entwickeln als ein solcher mit einer flexiblen Kolbenmembrane. Unter "steif" soll daher jegliches Materialverhalten verstanden werden, das es ermöglicht, den Bremskolben mit Betriebsdruck zu beaufschlagen, ohne dass er seine Funktion einbüsst bzw. es zu Undichtigkeiten kommt, indem z.B. der radial äußere Kolbenrand außer Kontakt mit der radial inneren Zylinderwandung des Bremszylinders gerät. Weiterhin kann die gewünschte lineare Kennlinie Kolbenhub/Bremskraft verwirklicht werden, weil die gegenüber dem Druckmittel wirksame Fläche eines steifen Bremskolbens unabhängig vom Kolbenhub stets gleich groß ist.

Gemäß eines weiteren Aspekts ist der Bremskolben an seiner radial äußeren Umfangsfläche mit einer entlang einer radialen inneren Zylinderwandung des Bremszylinders geführten Führungsfläche in Form einer Kugelschicht einer imaginären Kugel versehen, deren Mittelpunkt auf der Mittelachse des Bremszylinders liegt. Die Ebene dieser kugelschichtförmigen Führungsfläche ist dann senkrecht zur Bremskolbenstange angeordnet. Damit kann der Bremskolben gegenüber seiner Mittelage heraus schwenken, ohne dass sich die Größe des Luftspalts zwischen seiner Führungsfläche und der radialen inneren Zylinderwandung des Bremszylinders ändert. Die Führung des Bremskolbens im Bremszylinder ist daher unabhängig vom jeweiligen Kolbenhub und insbesondere unabhängig von den Schwenklagen des Bremskolbens.

Gemäß eines weiteren Aspekts schlägt die Erfindung wenigstens ein in einer radial äußeren Ringnut des Bremskolbens radial frei bewegliches elastisches Dichtungselement vor, welches auf seiner von der radial inneren Zylinderwandung des Bremszylinders weg weisenden Seite zusammen mit einem Nutgrund der Ringnut einen Ringraum begrenzt, welcher mit der Bremskammer derart in Strömungsverbindung steht, dass der Anpressdruck des Außendurchmessers des Dichtungselements gegen die radial innere Zylinderwandung des Bremszylinders abhängig von dem in dem Ringraum herrschenden Druck ist. Ein wesentlicher Vorteil eines solchen Dichtungselements ist darin zu sehen, dass es eine selbstverstärkende Dichtwirkung aufweist.

Ohne Anliegen eines durch Druckmittel erzeugten Drucks liegt das Dichtungselement unter geringer Eigenspannung und mit dementsprechend geringer Reibung an der radialen inneren Zylinderwandung des Bremszylinders an. Daher ist die dann nicht notwendige Dichtwirkung gering und der Bremskolben kann gegenüber radial inneren Zylinderwand des Bremskolbens unter geringer Reibung verschoben werden.

Bei Anliegen eines Bremsdrucks in der Bremskammer gelangt dieser Bremsdruck in den Ringraum zwischen Nutgrund und Dichtungselement, wodurch dieses in radialer Richtung verstärkt gegen die radial innere Zylinderwandung des Bremszylinders gedrängt wird, wodurch sich die Dichtwirkung erhöht. Bei Beaufschlagung der Bremskammer mit Druckmittel erhöht sich folglich der Anpressdruck des Dichtungselements gegenüber der radial inneren Zylinderwandung des Bremszylinders, was die dann notwendige höhere Dichtwirkung in selbstverstärkender Weise hervorruft.

Die Kombination der Merkmale des steifen Bremskolbens mit der kippbaren Lagerung über eine kugelschichtförmige Führungsfläche im Bremszylinder und einer selbstverstärkenden elastischen Dichtung bringt daher die oben erwähnten Vorteile mit sich.

Durch die in den Unteransprüchen aufgeführten Merkmale sind Weiterentwicklungen und Verbesserungen der in Anspruch 1 beschriebenen Erfindung möglich.

Besonders bevorzugt ist die Führungsfläche an einem an der radial äußeren Umfangsfläche des Bremskolbens gehaltenen Führungsring ausgebildet. Ein solcher kann beispielsweise verschleißbedingt leicht ausgewechselt werden.

Bevorzugt wird wenigstens ein solches Dichtungselement in Bezug zu einer den Mittelpunkt der imaginären Kugel beinhaltenden Ebene senkrecht zur Mittelachse des Bremszylinders axial versetzt angeordnet. Dann ist ein Hebelarm zwischen dem Dichtungselement und dem Mittelpunkt der Imaginären Kugel vorhanden, um welchen der Bremskolben zusammen mit der Bremskolbenstange schwenkt, so dass diese exzentrische Anordnung des Dichtungselements in Bezug zu dem Mittelpunkt der imaginären Kugel bewirkt, dass bei einem Verschwenken des Bremskolbens um diesen Mittelpunkt der Anpressdruck des Dichtungselements an die radial innere Zylinderwandung des Bremskolbens in einem Umfangsbereich höher und in einem anderen Umfangsbereich geringer ist. Dies hätte in dem Umfangsbereich des Dichtelements mit geringerem Anpressdruck an sich eine geringere Dichtwirkung zur Folge. Jedoch wird dieser geringere Anpressdruck des Dichtungselements in dem einen Umfangsbereich durch die Beaufschlagung der Ringraums des Dichtungselements mit Druckmittel aus der Bremskammer und damit ansteigendem Anpressdruck kompensiert, so dass auch in diesem Umfangsbereich des Dichtungselements eine günstige Dichtwirkung vorhanden ist.

Je geringer der Axialversatz zwischen dem Mittelpunkt der imaginären, die Kugelschicht als Führungsfläche ausbildenden Kugel und dem Dichtungselement ist, desto gleichmäßiger ist der Anpressdruck zwischen dem Dichtungselement und der radial inneren Zylinderwandung des Bremszylinders in Bezug zur Umfangsrichtung verteilt und desto besser ist die Dichtwirkung. Um einen möglichst geringen Axialversatz bzw. Hebelarm zwischen dem Mittelpunkt der imaginären Kugel als Drehpunkt des Bremskolbens und dem Dichtungselement zu erhalten, ist daher der Führungsring bevorzugt in unmittelbarer Nachbarschaft zu dem Dichtungselement angeordnet.

Weil das Dichtungselement als Dichtring ausgebildet ist, der eine Strömungsverbindung zwischen dem Ringraum und einem bezüglich einer ersten Dichtkante auf der höher druckbeaufschlagten Seite liegenden Flächenabschnitt der Kopffläche aufweist, kann das unter dem Fußteil des Dichtungsrings befindliche Druckmittel über die Strömungsverbindung zur Niederdruckseite gelangen, was einen Druckverlust an der Hochdruckseite hervorruft, welcher durch die vor der Inbetriebnahme der Dichtungsanordnung durchzuführende Dichtigkeitsprüfung eindeutig detektierbar ist. Diese Maßnahme verhindert folglich eine Inbetriebsetzung der Dichtungsanordnung mit falsch eingebautem Dichtungsring zuverlässig.

Gemäß einer besonders bevorzugten Ausführungsform wird die Strömungsverbindung durch wenigstens eine radial verlaufende Nut in der höher druckbeaufschlagten Seitenwand des Dichtungsrings gebildet, d.h. in der zur Bremskammer weisenden Seitenwand. Eine solche Nut kann durch eine nur geringfügige Änderung in der Spritzgußform für den Dichtungsring durch zusätzliches Vorsehen eines radial verlaufenden, Vorsprungs erzeugt werden, weshalb die Maßnahme relativ kostengünstig zu verwirklichen ist.

Gemäß einer Weiterbildung dieser Ausführungsform mündet ein Ende der radialen Nut nahe der ersten Dichtkante und das andere Ende am Ende des der höher druckbeaufschlagten Seite zugewandten Ringteils des Dichtungsrings. Hierdurch ergibt sich ein hinsichtlich des Strömungswiderstands vorteilhaft kurzer Strömungsweg, was den Druckabbau auf der Hochdruckseite bei Falscheinbau begünstigt.

### Zeichnung

Ein Ausführungsbeispiel der Erfindung ist in der Zeichnung dargestellt und in der nachfolgenden Beschreibung näher erläutert. In der Zeichnung zeigt
- Fig.1: eine Querschnittsdarstellung eines Dichtungsrings eines in einem Bremszylinder geführten Bremskolbens gemäß einer bevorzugten Ausführungsform der Erfindung in Einbaulage;
- Fig.2: eine Querschnittsdarstellung des Dichtungsrings von Fig.1 im ausgebauten Zustand;
- Fig.3: eine Querschnittsdarstellung des Bremszylinders mit einer als Kugelschicht ausgebildeten Führungsfläche des Bremskolbens;
- Fig.4: einen vergrößerten Ausschnitt von Fig.3;
- Fig.5: eine perspektivische Ansicht einer Kugelschicht.

### Beschreibung des Ausführungsbeispiels

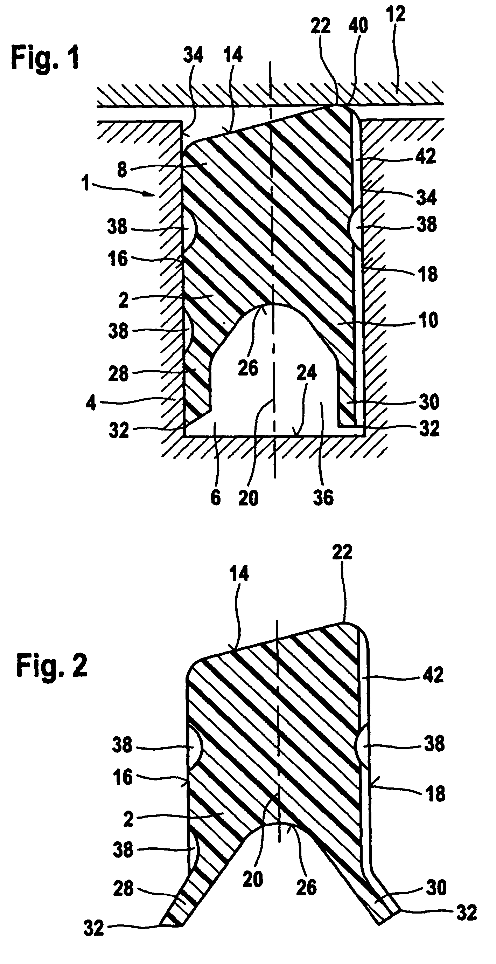

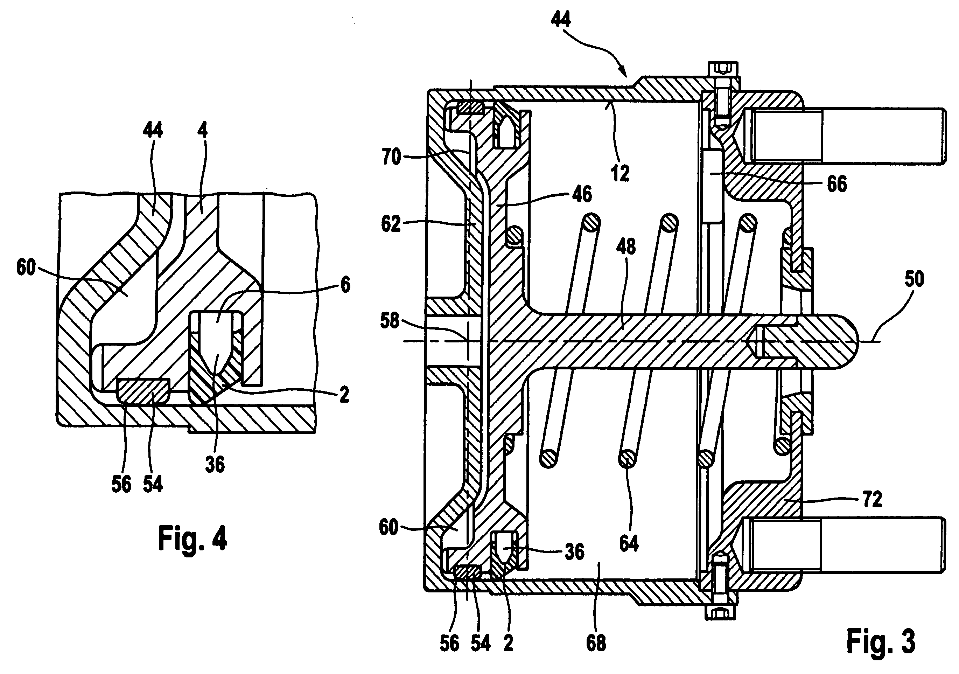

Der in Fig.1 gezeigte Dichtungsanordnung 1 mit Dichtungsring 2 dient zum Abdichten einer Bremskammer 60 eines in Fig.3 gezeigten Bremszylinders 44 gegenüber einer Federkammer 68 dieses Bremszylinders 44. Der Bremszylinder 44 ist ein druckmittelbetätigter, insbesondere ein pneumatisch betätigter Betriebsbremszylinder zum Betätigen einer Scheibenbremse eines Nutzfahrzeugs. Dieser Bremszylinder 44 bildet beispielsweise den Betriebsbremsteil eines aus Betriebsbremszylinder und Federspeicherbremszylinder gebildeten Kombizylinders, wie er insbesondere in der DE 198 30 154 A1 offenbart ist.

Hierzu ist der Dichtungsring 2 in eine in einem Bremskolben 4 des Bremszylinders 44 ausgebildete, nach radial außen offene Ringnut 6 mit im wesentlichen rechteckförmigem Querschnitt eingesetzt. Der Dichtungsring 2 hat einen Kopfteil 8 und einen Fußteil 10. Der Kopfteil 8 endet in radialer Richtung der Zylinderwandung 12 des Bremszylinders 44 zugewandt mit einer kegelmantelartigen Kopffläche 14, welche sich nahezu über die gesamte Breite des Dichtungsrings 2 von einer Seitenwand 16 des Dichtungsrings 2 über eine radiale Mittelebene 20 bis zur anderen Seitenwand 18 erstreckt. Die eine Seitenwand 16 ist die mit dem niedrigeren Druck (Federkammer 68 in Fig.3) und die andere Seitenwand 18 die mit dem höheren Druck (Bremskammer 60 in Fig.3) zu beaufschlagende Seite des Dichtungsrings 2. Im Bereich des Übergangs der anderen Seitenwand 18 zur Kopffläche 14 befindet sich eine gerundete erste Dichtkante 22, der anderseitige Übergang von der Kopffläche 14 zur einen Seitenwand 16 kann ebenfalls gerundet ausgebildet sein. Genauer befindet sich die erste Dichtkante 22 außerhalb der radialen Mittelebene 20, vorzugsweise zumindest nahe der anderen Seitenwand 18 des Dichtungsrings 2 auf der höher druckbeaufschlagten Seite (Bremskammer 60 in Fig.3). Die Neigung der Kopffläche 14 verläuft dabei derart, dass sie bei der einen Seitenwand 16 dem Fußteil 10 näher ist als bei der anderen Seitenwand 18. In Abänderung ist es möglich, die erste Dichtkante 22 geringfügig von der anderen Seitenwand 18 weg in Richtung zur radialen Mittelebene 20 hin zu verlagern. An die erste Dichtkante 22 schließt sich dann rechtseitig bis zur anderen Seitenwand 18 hin ein entgegengesetzt zur Kopffläche 14 geneigt verlaufender Kopfflächenabschnitt 40 an.

Der dem Nutgrund 24 der Ringnut 6 zugewandte Fußteil 10 des Dichtungsrings 2 ist radial gespalten, wobei der Spaltgrund 26 gut ausgerundet ist. In Verlängerung der Seitenwände 16, 18 weist der Dichtungsring 2 somit unter federnder Eigenspannung sich voneinander etwa in gleichem Maße abspreizende, schmale Ringteile 28, 30 auf, welche mit zweiten Dichtkanten 32 enden. Die Abspreizung der beiden Ringteile 28, 30 ist am besten anhand von Fig.2 zu sehen, in welcher der Dichtring 2 im ausgebauten Zustand dargestellt ist.

Im eingebauten Zustand gemäß Fig.1 sind die beiden Ringteile 28, 30 zueinander gebogen, wobei die zweiten Dichtkanten 32 mit Vorspannung an den Seitenwandungen 34 der Ringnut 6 nahe dem Nutgrund 24 anliegen. Dabei begrenzen die Ringteile 28, 30 zwischen sich und dem Nutgrund 24 der Ringnut 6 einen Ringraum 36. Im Ansatzbereich der Ringteile 28, 30 sowie im Bereich des Kopfteils 8 ist der Dichtungsring 2 beidseitig mit je einer ringnutartig ausgebildeten, ausgerundeten Ausnehmung 38 versehen. Druckbeaufschlagungsseitig können die Ausnehmungen 38 auch weggelassen werden. Die Ausnehmungen 38 können bei der Montage mit Schmierstoff gefüllt werden.

Der Dichtungsring 2 kann radial außen oder radial innen dichtend ausgebildet sein, d.h. seine erste Dichtkante 22 befindet sich an der Stelle des größten oder kleinsten Durchmessers des Dichtungsrings 2. Im Falle von Fig.1 ist er außen dichtend angeordnet. Nach dem Einsetzen liegen die Ringteile 28, 30 mit ihren zweiten Dichtkanten 32 unter elastischer Vorspannung an den Seitenwandungen 34 der Ringnut 6 an, wobei zumindest die gemäß Fig.1 linkseitige, der Niederdruckseite zugewandte zweite Dichtkante 32 dichtet. Die der höher druckbeaufschlagbaren Seitenwand 18 des Dichtungsrings 2 zugewandte, gemäß Fig.1 rechtsseitige zweite Dichtkante 32 kann weggelassen bzw. undicht ausgebildet sein. Die Zylinderwandung 12 umschließt den Dichtungsring 2, wobei auch die erste Dichtkante 22 unter elastischer Materialvorspannung dort dichtend anliegt.

Zwischen dem Ringraum 36 und einem bezüglich der ersten Dichtkante 22 auf der höher druckbeaufschlagten Seite (Bremskammer 60 in Fig.3) liegenden Flächenabschnitt 40 der Kopffläche 14 des Dichtrings 2 ist eine Strömungsverbindung ausgebildet. Diese Strömungsverbindung wird vorzugsweise durch wenigstens eine radial verlaufende Nut 42 in der höher druckbeaufschlagten anderen Seitenwand 18 des Dichtungsrings 2 gebildet, also der Seite zur Bremskammer 60 hin. Vorzugsweise sind sechs mit Umfangsabstand voneinander angeordnete Nuten 42 am Dichtungsring 2 vorgesehen. Hierbei mündet beispielsweise ein Ende einer solchen radialen Nut 42 nahe der ersten Dichtkante 22 und das andere Ende am Ende des der höher druckbeaufschlagten Seite zugewandten Ringteils 30 des Dichtungsrings 2. Anstatt der radialen Nut 42 als kürzeste Verbindung zwischen dem der ersten Dichtkante 22 vorgelagerten Flächenabschnitt 40 der Kopffläche 14 und dem Ringraum 36 sind alternativ auch eine Spiralnut oder Noppen möglich.

Wird nunmehr der Dichtungsring 2 von rechts her mit Druckmittel aus der Bremskammer 60 beaufschlagt, so gelangt dieses Druckmittel in der Ringnut 6 an der rechtsseitigen zweiten Dichtkante 32 vorbei zwischen den Nutgrund 24 und die beiden Ringteile 28, 30 und dehnt den Dichtungsring 2 nach radial außen aus. Dabei wird die erste Dichtkante 22 verstärkt an die Zylinderwandung 12 des Bremszylinders 44 angepresst, wodurch sich die Dichtwirkung verstärkt. Es ist hierbei wesentlich, dass die Druckmittelbeaufschlagung den Dichtungsring 2 etwa auf dessen ganzer axialer Breite nach radial außen, aber auf einem demgegenüber verschwindend kleinen Flächenabschnitt 40 am Übergang der ersten Dichtkante 22 zur anderen Seitenwand 18 nach radial innen belastet. Zugleich drückt die Druckbeaufschlagung den Dichtungsring 2 mit seiner einen Seitenwand 16 an die Seitenwandung 34 der Ringnut 6 an.

Erfährt der Bremskolben 4 im Rahmen des geringen Spiels zwischen ihm und der Zylinderwandung 12 eine lokale Verschiebung, so vermag der Dichtungsring 2 dieser Verschiebung unter der Wirkung seiner radialen Druckbeaufschlagung am Fußteil 10 zu folgen. Die Reibung des Dichtungsrings 2 an der linken Seitenwandung 34 der Ringnut 6, welche durch die Fettfüllungen der Ausnehmungen 38 gemindert ist, vermag diese Folgebewegung des Dichtungsrings 2 nicht zu hemmen. Die erste Dichtkante 22 verbleibt also wie auch die zweite Dichtkante 32 des linken, der niedriger druckbeaufschlagten Seite zugewandten Ringteils 28 in dichter Anlage an der Zylinderwandung 12 bzw. an der Seitenwandung 34 der Ringnut 6 des Kolbens 4.

Wie eingangs beschrieben handelt es sich bei dem Zylinder-Kolbentrieb, in welchem die Dichtungsanordnung 1 von Fig.1 eingesetzt wird, um einen druckmittelbetätigten Bremszylinder 44, insbesondere um einen pneumatisch betätigten Betriebsbremszylinder, in welchem der pneumatisch beaufschlagbare Betriebsbremskolben 4 geführt ist. An dem Bremskolben 4 ist die Bremskolbenstange 48 dreh- und axialfest befestigt, die an einem Schwenkhebel einer aus Maßstabsgründen in Fig.3 nicht gezeigten Bremsmechanik der Scheibenbremse des Nutzfahrzeugs angelenkt ist, der andererseits über eine Zuspannwelle an einem Bremssattel der Scheibenbremse gelagert ist. Der Schwenkhebel ist mit einer Zuspannwelle drehfest verbunden, die eine Nockenkontur aufweist, welche bei einem Verdrehen um ihre Längsachse zu einer Relatiwerschiebung des Bremssattels und einer Bremsbacke in Richtung Bremsscheibe führt, nach der Art wie in DE 197 56 519 A1 beschrieben. Dann dreht sich bei Verschiebung des Bremskolbens 4 der Anlenkpunkt der Bremskolbenstange 48 am Schwenkhebel um die Zuspannwelle, was eine Verkippung der Baueinheit aus Bremskolben 4 und Bremskolbenstange 48 innerhalb des Bremszylinders 44 zur Folge hat. Mit anderen Worten verschwenkt die Bremskolbenstange 48 zusammen mit dem Bremskolben 4 während eines Betätigungshubs in von einer Mittelachse 50 des Bremszylinders 44 verkippte Lage.

Im Unterschied zur DE 197 56 519 A1 ist der Bremskolben 4 jedoch nicht als Kolbenmembrane sondern steif ausgebildet, d.h. er verformt sich unter den im Betrieb auftretenden Kräften nicht oder nur unwesentlich. Weiterhin wird der Bremskolben 4 samt dem Dichtungsring 2 und einem Führungsring 54 im Gegensatz zu einer Kolbenmembrane innerhalb der Zylinderwandung 12 bzw. der radial inneren Zylinderwandung des Bremszylinders 44 einheitlich geführt bzw. druckmittelbetätigt verschoben, d.h. der Bremskolben 4 und alle seine Bestandteile werden gleichzeitig und um den gleichen Weg verschoben.

Der Bremskolben 4 ist an seiner radial äußeren Umfangsfläche mit einer entlang der radialen inneren Zylinderwandung 12 des Bremszylinders 44 geführten Führungsfläche 56 in Form einer Kugelschicht einer imaginären Kugel versehen, deren Mittelpunkt 58 auf der Mittelachse 50 des Bremszylinders 44 liegt. Diese kugelschichtförmige Führungsfläche 56 ist symmetrisch bezüglich ihrer Mittelebene 70, in welcher der Mittelpunkt 58 der imaginären Kugel liegt, wobei diese Mittelebene 70 senkrecht zur Bremskolbenstange 48 bzw. zur Mittelachse 50 angeordnet ist.

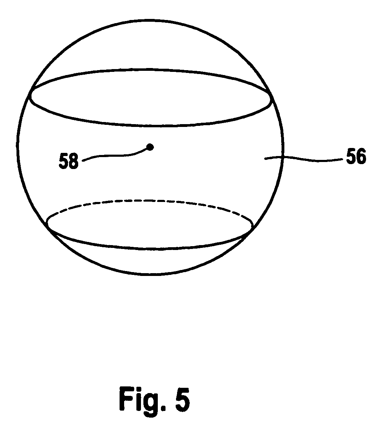

Eine solche Kugelschicht 56 ist exemplarisch in Fig.5 gezeigt, wobei sich die radial innere Zylinderwandung 12 des Bremszylinders 44 und die kugelschichtförmige Führungsfläche 56 in Linienberührung kontaktieren. Damit können der Bremskolben 4 und die Bremskolbenstange 48 als Einheit aus der in Fig.3 gezeigten Mittellage im Betrieb um den Mittelpunkt 58 schwenken, ohne dass sich die Größe des geringen Luftspalts entlang der Berührungslinie zwischen der Führungsfläche 56 und der radialen inneren Zylinderwandung 12 des Bremszylinders 44 ändert.

Die Führungsfläche 56 ist an einem an der radial äußeren Umfangsfläche des Bremskolbens 4 gehaltenen Führungsring 54 ausgebildet, wobei der Führungsring 54 in unmittelbarer Nachbarschaft zu dem Dichtungsring 2 angeordnet ist, wie insbesondere aus Fig.4 hervorgeht.

Durch Belüften der Bremskammer 60, welche sich zwischen einer Bodenwand 62 des Bremszylinders 44 und dem Bremskolben 4 erstreckt, kann Letzterer gegen die Wirkung einer sich einerseits am Bremskolben 4 und andererseits an einer Stirnwand 72 des Bremszylinders 44 abstützenden Rückholfeder 64 in Zuspannstellung gebracht werden. Ein in der Ansicht von Fig.3 nicht sichtbarer Druckmittelanschluss dient zum Zu- und/oder Abführen von Druckmittel in die bzw. aus der Bremskammer 60. Ein Ventil 66 sorgt für eine Entlüftung einer die Rückholfeder 64 aufnehmenden Federkammer 66, wenn der druckmittelbeaufschlagte Bremskolben 4 diese verkleinert. Die Federkammer 66 bildet die mit dem niedrigeren Druck beaufschlagte Seite des Dichtungsrings 2 während die Bremskammer 60 die mit dem höheren Druck beaufschlagte Seite des Dichtungsrings darstellt, wobei der Dichtungsring 2 beide Kammern 60 und 66 gegeneinander abdichtet.

Vor diesem Hintergrund ist die Funktionsweise des Bremszylinders 44 wie folgt :

Ausgehend von der in Fig.3 gezeigten Situation, in der die Betriebsbremse gelöst sind, wird zum Zuspannen der Betriebsbremse die Bremskammer 60 über den Druckmittelanschluss belüftet, woraufhin einerseits der Bremskolben 4 von der Bodenwand 62 weg nach rechts verschoben wird. Übertragen auf die Situation von Fig.1 bedeutet dies, dass der Dichtungsring 2 von rechts her mit Druckmittel aus der Bremskammer 60 beaufschlagt wird. Dieses Druckmittel gelangt über den Flächenabschnitt 40 des Dichtungsrings 2 an der rechtsseitigen zweiten Dichtkante 32 vorbei zwischen den Nutgrund 24 und die beiden Ringteile 28, 30 und dehnt den Dichtungsring 2 nach radial außen. Dabei wird die erste Dichtkante 22 verstärkt an die Zylinderwandung 12 angepresst, wodurch sich die Dichtwirkung verstärkt. Zugleich drückt die Druckbeaufschlagung den Dichtungsring 2 mit seiner einen Seitenwand 16 an die Seitenwandung 34 der Ringnut 6 an. Die gleichzeitige Verschiebung des Bremskolbens 4 bewirkt einerseits, dass die Scheibenbremse zugespannt wird. Andererseits verkippt, wie eingangs bereits beschrieben, der Bremskolben 4 zusammen mit der Bremskolbenstange 48 aus der Mittellage 50 heraus, wobei der Bremskolben 4 über die kugelschichtförmige Führungsfläche 56 an der radial inneren Zylinderwandung 12 geführt ist, wodurch eine Art Gelenk gebildet wird. Gleichzeitig strömt Druckmittel durch den schmalen Luftspalt zwischen der Führungsfläche 56 und der radial inneren Zylinderwandung 12 hindurch bis zum Dichtungsring 2, welcher dann infolge des Druckanstiegs im Ringraum 36 (siehe Fig.1) einen größeren Anpressdruck auf die radial innere Zylinderwandung 12 ausübt und somit eine zuverlässige Abdichtung zwischen der Bremskammer 60 und der Federkammer 68 bewerkstelligt.

Hingegen sorgt ein Entlüften der Bremskammer 60 dafür, dass der Bremskolben 4 durch die Rückholfeder 64 in Lösestellung, d.h. in Fig.3 nach rechts verschoben wird und an der Bodenwand 62 anschlägt. Durch den dann geringeren Druck im Ringraum 36 wird das Lösen der Bremse infolge der geringeren Reibung zwischen Dichtungsring 2 und radial innerer Zylinderwandung 12 erleichtert.

### Bezugszahlenliste

- 1: Dichtungsanordnung
- 2: Dichtungsring
- 4: Bremskolben
- 6: Ringnut
- 8: Kopfteil
- 10: Fußteil
- 12: Zylinderwandung
- 14: Kopffläche
- 16: Seitenwand
- 18: Seitenwand
- 20: radiale Mittelebene
- 22: erste Dichtkante
- 24: Nutgrund
- 26: Spaltgrund
- 28: Ringteil
- 30: Ringteil
- 32: zweite Dichtkante
- 34: Seitenwandung
- 36: Ringraum
- 38: Ausnehmung
- 40: Flächenabschnitt
- 42: radiale Nut
- 44: Bremszylinder
- 48: Bremskolbenstange
- 50: Mittelachse
- 54: Führungsring
- 56: Führungsfläche
- 58: Mittelpunkt
- 60: Bremskammer
- 62: Bodenwand
- 64: Rückholfeder
- 66: Ventil
- 68: Federkammer
- 70: Mittelebene
- 72: Stirnwand

## Patentansprüche

1. Bremszylinder (44) eines Fahrzeugs, in welchem ein druckmittelbetätigter Bremskolben (4) geführt ist, welcher eine Bremskammer (60) begrenzt und mit einer auf Bremsbetätigungselemente einwirkenden Bremskolbenstange (48) verbunden ist, wobei ein Druckmittelanschluss zum Zu- und/oder Abführen von Druckmittel in die bzw. aus der Bremskammer (60) vorgesehen und die Bremskolbenstange (48) zusammen mit dem Bremskolben (4) während eines Betätigungshubs in von einer Mittelachse (50) des Bremszylinders (44) verkippte Lagen schwenkt, **dadurch gekennzeichnet, dass** der Bremskolben (4) steif ausgebildet und an seiner radial äußeren Umfangsfläche mit einer entlang einer radialen inneren Zylinderwandung (12) des Bremszylinders (44) geführten Führungsfläche (56) in Form einer Kugelschicht einer imaginären Kugel versehen ist, deren Mittelpunkt (58) auf der Mittelachse (50) des Bremszylinders (44) liegt, sowie mit wenigstens einem in einer radial äußeren Ringnut (6) des Bremskolbens (4) radial beweglichen elastischen Dichtungselement (2), welches auf seiner von der radial inneren Zylinderwandung (12) des Bremszylinders (44) weg weisenden Seite zusammen mit einem Nutgrund (24) der Ringnut (6) einen Ringraum (36) begrenzt, welcher mit der Bremskammer (60) derart in Strömungsverbindung steht, dass der Anpressdruck des Außendurchmessers des Dichtungselements (2) gegen die radial innere Zylinderwandung (12) des Bremszylinders (44) abhängig von dem in der Bremskammer (60) herrschenden Druck ist.

2. Bremszylinder nach Anspruch 1, **dadurch gekennzeichnet, dass** die kugelschichtförmige Führungsfläche (56) symmetrisch bezüglich ihrer Mittelebene (70) ist, in welcher der Mittelpunkt (58) der imaginären Kugel liegt, wobei diese Mittelebene (70) senkrecht zur Mittelachse (50) angeordnet ist.

3. Bremszylinder nach Anspruch 1 oder 2, **dadurch gekennzeichnet, dass** das Dichtungselement (2) in Bezug zum Mittelpunkt (58) der imaginären Kugel axial versetzt angeordnet ist.

4. Bremszylinder nach Anspruch 3, **dadurch gekennzeichnet, dass** die Führungsfläche (56) an einem an der radial äußeren Umfangsfläche des Bremskolbens (4) gehaltenen Führungsring (54) ausgebildet ist.

5. Bremszylinder nach Anspruch 4, **dadurch gekennzeichnet, dass** der Führungsring (54) in unmittelbarer Nachbarschaft zu dem Dichtungselement (2) angeordnet ist.

6. Bremszylinder nach einem der vorhergehenden Ansprüche, **dadurch gekennzeichnet, dass** das Dichtungselement (2) als Dichtungsring ausgeführt ist.

7. Bremszylinder nach Anspruch 6, **dadurch gekennzeichnet, dass** ein der radial inneren Zylinderwandung des Bremszylinders (44) zugewandtes Kopfteil (8) des Dichtungsrings (2) wenigstens eine an der radial inneren Zylinderwandung (12) des Bremszylinders (44) anliegende erste Dichtkante (22) aufweisende Kopffläche (14) beinhaltet und ein Fußteil (10) des Dichtungsrings (2) in zwei sich elastisch voneinander abspreizende, im Einbauzustand zwischen sich und dem Nutgrund (24) der Ringnut (6) den Ringraum (36) begrenzende Ringteile (28, 30) gespalten ist, die auf den einander abgewandten Seiten mit je einer zweiten, mit einer Seitenwandung (34) der Ringnut (6) zusammenwirkenden Dichtkante (32) enden.

8. Bremszylinder nach Anspruch 7, **dadurch gekennzeichnet, dass** die Kopffläche (14) sich von einer Seitenwand (16) des Dichtungsrings (2) auf einer der Bremskammer (60) gegenüber liegenden Kammer (68) des Bremszylinders (44) liegenden Seite bis über eine radiale Mittelebene (20) des Dichtungsrings (2) erstreckt und die erste Dichtkante (22) sich außerhalb der radialen Mittelebene (20) zumindest nahe der anderen Seitenwand (18) des Dichtungsrings (2) auf der Seite der Bremskammer (60) befindet, wobei der elastische Dichtungsring (2) eine Strömungsverbindung (42) zwischen dem Ringraum (36) und einem bezüglich der ersten Dichtkante (22) auf der Seite der Bremskammer (60) liegenden Flächenabschnitt (40) der Kopffläche (14) aufweist.

9. Bremszylinder nach Anspruch 8, **dadurch gekennzeichnet, dass** die Strömungsverbindung durch wenigstens eine radial verlaufende Nut (42) in der der Bremskammer (60) zugewandten Seitenwand (18) des Dichtungsrings (2) gebildet wird.

10. Bremszylinder nach Anspruch 9, **dadurch gekennzeichnet, dass** ein Ende der radialen Nut (42) nahe der ersten Dichtkante (22) und das andere Ende am Ende des der Bremskammer (60) zugewandten Ringteils (30) des Dichtungsrings (2) mündet.

## Claims

1. Automotive brake cylinder (44) in which a pressure medium actuated brake piston (4) is guided, the brake piston delimiting a brake chamber (60) and being connected to a brake piston rod (48) acting on brake actuating elements, wherein a pressure medium connection for supplying pressure medium to and/or removing pressure medium from the brake chamber (60) is provided, and the brake piston rod (48) together with the brake piston (4) pivots into positions tilted from a center axis (50) of the brake cylinder (44) during an actuation stroke, **characterized in that** the brake piston (4) is of rigid design and is provided on the radially outer circumferential surface thereof with a guide surface (56) which is guided along a radial inner cylinder wall (12) of the brake cylinder (44) and is in the form of a spherical segment of an imaginary sphere, the center point (58) of which lies on the center axis (50) of the brake cylinder (44), and with at least one elastic sealing element (2) which is movable radially in a radially outer annular groove (6) of the brake piston (4) on the side thereof which faces away from the radially inner cylinder wall (12) of the brake cylinder (44), delimits, together with a groove base (24) of the annular groove (6), an annular space (36) which is fluidically connected to the brake chamber (60) in such a manner that the contact pressure of the outer diameter of the sealing element (2) against the radially inner cylinder wall (12) of the brake cylinder (44) depends on the pressure prevailing in the brake chamber (60).

2. Brake cylinder according to Claim 1, **characterized in that** the guide surface (56) which is in the shape of a spherical segment is symmetrical with respect to the center plane (70) thereof, in which the center point (58) of the imaginary sphere lies, said center plane (70) being arranged perpendicular to the center axis (50).

3. Brake cylinder according to Claim 1 or 2, **characterized in that** the sealing element (2) is arranged offset axially with respect to the center point (58) of the imaginary sphere.

4. Brake cylinder according to Claim 3, **characterized in that** the guide surface (56) is formed on a guide ring (54) held on the radially outer circumferential surface of the brake piston (4).

5. Brake cylinder according to Claim 4, **characterized in that** the guide ring (54) is arranged in the immediate vicinity of the sealing element (2).

6. Brake cylinder according to one of the preceding claims, **characterized in that** the sealing element (2) is in the form of a sealing ring.

7. Brake cylinder according to Claim 6, **characterized in that** a head part (8) of the sealing ring (2), which head part faces the radially inner cylinder wall of the brake cylinder (44), contains at least one head surface (14) having a first sealing edge (22) which bears against the radially inner cylinder wall (12) of the brake cylinder (44), and a foot part (10) of the sealing ring (2) is divided into two annular parts (28, 30) which spread apart elastically from each other, in the fitted state delimit the annular space (36) therebetween and the groove base (24) of the annular groove (6) and end on the sides facing away from each other with a respective second sealing edge (32) interacting with a side wall (34) of the annular groove (6).

8. Brake cylinder according to Claim 7, **characterized in that** the head surface (14) extends from a side wall (16) of the sealing ring (2) on a side lying chamber (68) of the brake cylinder (44) opposite the brake chamber (60) over a radial center plane (20) of the sealing ring (2), and the first sealing edge (22) is located outside the radial center plane (20) at least close to the other side wall (18) of the sealing ring (2) on the side of the brake chamber (60), the elastic sealing ring (2) having a fluidic connection (42) between the annular space (36) and a surface section (40) of the head surface (14), which surface section lies on the side of the brake chamber (60) with respect to the first sealing edge (22).

9. Brake cylinder according to Claim 8, **characterized in that** the fluidic connection is formed by at least one radially extending groove (42) **in that** side wall (18) of the sealing ring (2) which faces the brake chamber (60).

10. Brake cylinder according to Claim 9, **characterized in that** one end of the radial groove (42) opens close to the first sealing edge (22) and the other end opens at the end of that annular part (30) of the sealing ring (2) which faces the brake chamber (60).

## Revendications

1. Cylindre de frein (44) d'un véhicule, dans lequel un piston de frein (4) est guidé à commande d'un milieu sous pression, qui délimite une chambre de freinage (60) et est relié à une tige de piston de freinage (48), dans lequel un raccord de milieu sous pression est pourvu pour l'alimentation et/ou l'évacuation du milieu sous pression dans ou respectivement en dehors ladite chambre de freinage (60) et dans lequel ladite tige de piston de freinage (48), ensemble avec ledit piston de frein (4), pivote dans des positions basculées relativement à un axe central (50) dudit cylindre de frein (44) au cours d'une course d'actionnement, **caractérisé en ce que** ledit piston de frein (4) a une configuration rigide et est muni à sa surface périphérique radialement extérieure d'une aire de guidage (56) sous forme d'une couche sphérique d'une bille imaginaire, qui est guidée le long d'une paroi de cylindre (12) radialement intérieure dudit cylindre de frein (44), dont le centre (58) se trouve sur ledit axe central (50) dudit cylindre de frein (44), ainsi que d'au moins un seul élément d'étanchéité (2) élastique mobile radialement dans une rainure annulaire (6) radialement extérieure dudit piston de frein (4), lequel élément délimite, ensemble avec un fond de rainure (24) de ladite rainure annulaire (6), un espace annulaire (36) de son côté opposé à ladite paroi de cylindre (12) radialement intérieur dudit cylindre de frein (44), cet espace se trouvant en communication fluidique avec ladite chambre de frein (60) d'une telle façon, que la pression d'appui du diamètre extérieur dudit élément d'étanchéité (2) contre ladite paroi de cylindre (12) radialement intérieure dudit cylindre de frein (44) fait fonction de la pression régnant dans ladite chambre de frein (60).

2. Cylindre de frein selon la revendication 1, **caractérisé en ce que** ladite aire de guidage (56) en forme de couche sphérique est symétrique relativement à son plan central (70), dans lequel se trouve de centre (58) de ladite bille imaginaire, à ce plan central (70) étant orthogonal sur ledit axe central (50).

3. Cylindre de frein selon la revendication 1 ou 2, **caractérisé en ce que** ledit élément d'étanchéité (2) est disposé à déport axial relativement au centre (58) de ladite bille imaginaire.

4. Cylindre de frein selon la revendication 3, **caractérisé en ce que** ladite aire de guidage (56) est formée à un anneau de guidage (54) retenu à ladite surface périphérique radialement extérieure dudit piston de frein (4).

5. Cylindre de frein selon la revendication 4, **caractérisé en ce que** ledit anneau de guidage (54) est disposé dans le voisinage immédiat dudit élément d'étanchéité.

6. Cylindre de frein selon une quelconque des revendications précédentes, **caractérisé en ce que** ledit élément d'étanchéité (2) est configuré en joint torique d'étanchéité.

7. Cylindre de frein selon la revendication 6, **caractérisé en ce qu'**une partie de tête (8) dudit joint torique d'étanchéité (2), qui se trouve en face de ladite paroi de cylindre radialement intérieure dudit cylindre de frein (44), renferme au moins une aire de tête (14) munie d'une première arête d'étanchéité, qui porte contre ladite paroi de cylindre (12) radialement intérieure dudit cylindre de frein (44), et **en ce qu'**une partie de base (10) dudit joint torique d'étanchéité (2) est fendu en deux partie d'anneau (28, 30), qui s'écartent l'une de l'autre de façon élastique et délimitent, en état monté, entre eux et ledit fond de rainure (24) de ladite rainure annulaire (6) ledit espace annulaire (36), ces parties d'anneau se terminant en une deuxième arête d'étanchéité respective à leurs côtés opposés l'un à l'autre, cette arête coopérant avec une paroi latérale (34) de ladite rainure annulaire (6).

8. Cylindre de frein selon la revendication 7, **caractérisé en ce que** ladite aire de tête (14) s'étend à partir d'une paroi latérale (16) dudit anneau d'étanchéité d'un côté d'une chambre (68) dudit cylindre de frein (44), qui est opposé à ladite chambre de frein (60), jusqu'à une position au-delà dudit plan central radial (20) dudit anneau d'étanchéité, et **en ce que** ladite première arête d'étanchéité (22) se trouve en dehors dudit plan central radial (20) au moins à proximité de l'autre paroi latérale (18) dudit joint torique d'étanchéité (2) du côté de ladite chambre de frein (60), audit joint torique d'étanchéité élastique présentant une communication fluidique (42) entre ledit espace annulaire (36) et un segment de surface (40) de ladite aire de tête (14), qui est formé du côté de ladite chambre de frein (60) relativement à ladite première arête d'étanchéité (22).

9. Cylindre de frein selon la revendication 8, **caractérisé en ce que** ladite communication fluidique est formée par au moins une rainure (42) s'étendant en sens radial dans ladite paroi latérale (18) dudit joint torique d'étanchéité, qui se trouve en face de ladite chambre de frein (60).

10. Cylindre de frein selon la revendication 9, **caractérisé en ce qu'**une extrémité de ladite rainure radiale (42) s'ouvre, à proximité de ladite première arête d'étanchéité (22), pendant que l'autre extrémité s'ouvre à l'extrémité de ladite partie annulaire (30) dudit joint torique d'étanchéité (2), qui se trouve en face de ladite chambre de frein (60).
